# FASCICULE DE BREVET EUROPEEN

(11) **EP 1 893 472 B1**
(45) Date de publication et mention de la délivrance du brevet: **16.11.2011**
(21) Numéro de dépôt: 06778914.9
(22) Date de dépôt: 09.06.2006
(51) Int. Cl.: B62D 65/02

(54) **CONDUIT DE DISTRIBUTION D'AIR DANS L'HABITACLE D'UN VEHICULE AUTOMOBILE**
LUFTVERTEILUNGSKANAL IM PASSAGIERRAUM EINES KRAFTFAHRZEUGS
AIR DISTRIBUTION DUCT IN THE PASSENGER COMPARTMENT OF A MOTOR VEHICLE

(30) Priorité: 14.06.2005 FR 0551598
(43) Date de publication de la demande: 05.03.2008
(73) Titulaire: Renault SAS, 92100 Boulogne Billancourt (FR)
(72) Inventeur: BILLARD, Xavier, F-78990 Elancourt (FR); COIFFIER, Jérémie, F-91400 Orsay (FR)
(86) Numéro de dépôt international: PCT/FR2006/050516
(87) Numéro de publication internationale: WO 2006/134288

(56) Documents cités:
- WO-A-01/70558
- DE-U1- 29 916 470
- FR-A1- 2 771 054
- US-A- 5 060 697
- US-A1- 2007 295 453
- US-B1- 6 391 470

## Description

La présente invention concerne un conduit de distribution d'air dans l'habitacle d'un véhicule automobile, et en particulier un tel dispositif relié à un groupe de climatisation permettant d'amener l'air, éventuellement chauffé ou refroidi, en différents endroits de l'habitacle.

Avec la réduction accrue des nuisances acoustiques produites par le moteur du véhicule, le groupe de climatisation est devenu une source acoustique notable à laquelle contribue le dispositif de distribution d'air. En raison de la transparence des conduits d'air de ce dernier, le bruit du ventilateur se propage jusque dans l'habitacle. Par ailleurs, ces conduits sont eux-mêmes une source de bruit provenant des turbulences de l'écoulement générées par leur architecture.

Les dispositifs de distribution d'air connus, généralement disposés dans la planche de bord du véhicule, présentent également l'inconvénient d'occuper un espace non négligeable, complexe à gérer lors de la conception du véhicule.

Une solution pour réduire leur encombrement consiste à utiliser directement une traverse métallique du véhicule, située à l'intérieur de la planche de bord, pour conduire l'air, tel que décrit dans le document FR 2 669 885 (PEUGEOT). Cette solution présente toutefois l'inconvénient de causer des pertes thermiques, les matériaux formant la traverse présentant une inertie thermique plus importante que ceux utilisés pour les conduits de distribution conventionnels. L'air circulant dans la traverse est alors plus long à réchauffer ou à refroidir, ce qui entraîne une dégradation du confort des occupants du véhicule.

Une autre solution consiste à placer à l'intérieur d'une traverse un conduit de distribution d'air, tel que décrit dans le document DE 102 20 025 (BEHR) par exemple. Ce conduit peut être réalisé en un matériau peu coûteux et peut être supporté à l'intérieur de la traverse par des supports rigides fixés sur la traverse. La couche d'air entre le conduit et la traverse sert alors d'isolant thermique. Un tel dispositif permet à la traverse d'être structurellement rigide, mais aucune absorption acoustique n'est prévue de sorte que la conduite reste une source de bruit.

Les prestations thermiques et acoustiques du dispositif de distribution d'air peuvent être améliorées en ajoutant des supports élastiques ou semi-rigides qui absorbent les vibrations du conduit, tel que décrit dans le document US 6 715 954 (BENTELER). Toutefois, l'ajout de tels supports sur la périphérie du conduit s'avère coûteux à réaliser et engendre un processus complexe de montage de la traverse, dont la forme de départ est profondément modifiée.

On connaît pour DE 29916470 un véhicule intégrant un condit de distribution d'ais dans une tranverse, comme indiqué dans le préamble de la revendication 1 annexée.

Il existe donc un besoin de réaliser à moindre coût un dispositif de distribution d'air peu encombrant, présentant une bonne isolation thermique et acoustique, et facile à monter dans le véhicule.

A cet effet, l'objet de la présente invention concerne un véhicule automobile comportant au moins une traverse creuse rigide de renforcement de la structure du véhicule, intégrant un conduit de distrution d'air tel que défini dans la revendication 1 annexée.

Le conduit extrudé étant situé à l'intérieur de la traverse, l'encombrement du dispositif de distribution est réduit. Par ailleurs, la réalisation du conduit pas extrusion permet de réduire les quantités de matière à utiliser et donc le coût de réalisation. La rigidité du conduit extrudé lui permet aussi de conserver une section sensiblement constante lorsqu'il sera bridé dans la traverse, ce qui a l'avantage de faciliter l'écoulement de l'air dans l'habitacle en garantissant la qualité des prestations thermiques. Enfin, la couche d'air entre le conduit et la traverse assure une isolation thermique du conduit.

Le dispositif de distribution d'air proposé peut présenter les caractéristiques suivantes, individuellement ou en combinaison :
- le conduit extrudé comporte aux moins deux ouvertures destinées à faire circuler l'air issu d'un bloc de climatisation vers un habitacle de véhicule ;
- les excroissances sont réparties régulièrement sur la périphérie et sur la longueur de la traverse ;
- le conduit extrudé est en matériau recyclable, et de préférence en matière plastique ; et
- la traverse est destinée à être placée à l'intérieur du tableau de bord de véhicule automobile pour le renforcer.

La présente invention concerne en outre un procédé de montage d'un dispositif de distribution d'air dans l'habitacle d'un véhicule automobile dans lequel on assemble la traverse creuse, la traverse tubulaire et la pièce de raccordement pour former la traverse, on emboîte le conduit extrudé dans la traverse creuse, et on monte l'ensemble ainsi assemblé dans le tableau de bord du véhicule.

D'autres caractéristiques et avantages de l'invention apparaîtront à la lecture de la description détaillée d'un mode de réalisation pris à titre d'exemple non limitatif, en liaison avec les dessins annexés, sur lesquels :
- la figure 1 est une représentation schématique en perspective d'un dispositif de distribution d'air intégré dans le tableau de bord d'un véhicule,
- la figure 2 est une représentation schématique en perspective d'un dispositif de distribution d'air selon un mode de réalisation de l'invention,
- la figure 3 est une représentation schématique d'une section de la traverse creuse comprenant le conduit extrudé.

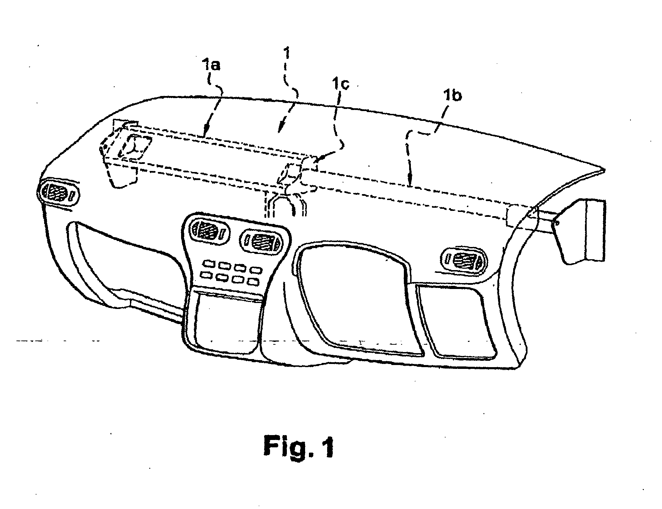

La figure 1 représente une traverse 1 de renforcement de la structure du véhicule. Cette traverse 1 est intégrée à l'intérieur de la planche de bord du véhicule, et supporte des éléments structurels, tels que le compteur ou le bloc de climatisation.

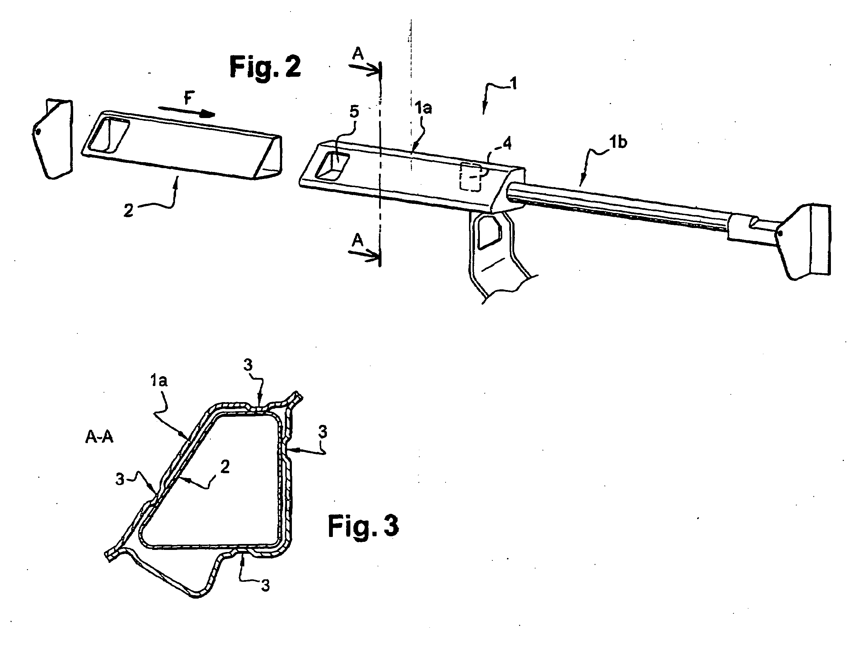

Cette traverse 1 est par exemple située à proximité du bord inférieur du pare brise, à l'intérieur de la planche de bord. Elle présente une section fermée creuse (figure 3) et est réalisée en un matériau rigide, généralement métallique.

Le conduit de distribution 2 est réalisé en matière plastique par extrusion. Il est de forme sensiblement parallélépipédique et comporte deux ouvertures 4 et 5 placées respectivement de chaque coté du conduit. La première ouverture 4 est destinée à recevoir l'air provenant du bloc de climatisation pour le faire transiter, via le conduit 2, vers la seconde ouverture 5. Celle-ci est mise en relation avec l'habitacle du véhicule de manière conventionnelle afin d'y amener l'air, éventuellement chauffé ou refroidi.

Tel que représenté sur la figure 2, le conduit de distribution d'air 2 est inséré dans la traverse 1. Cette dernière est composée d'une partie creuse 1a, d'une partie tubulaire 1b et d'une pièce de raccordement 1c destinée à relier les deux parties de la traverse 1a et 1b. La pièce de raccordement 1c permet en outre d'assurer la rigidité de l'ensemble lorsque la traverse 1 est montée à l'intérieur de la planche de bord et de fermer la cavité de la partie creuse 1a. La traverse 1 est reliée aux pieds de la caisse par l'intermédiaire de liaisons, non représentées, garantissant une résistance efficace de la structure de la caisse du véhicule en cas de choc latéral.

Tel que représenté sur la figure 3, le conduit est supporté par des excroissances 3 réalisées sur la partie creuse 1a et réparties régulièrement sur sa périphérie et sur toute sa longueur afin de garder un écart plus ou moins constant entre la paroi de la partie 1a et celle du conduit 2. Cet écart est de préférence supérieur à 3 mm. Pour plus de clarté, il a été exagéré sur les figures.

Ces excroissances 3 font saillie à l'intérieur de la cavité de la partie creuse 1a et servent d'une part à guider le conduit 2 lorsqu'on le monte dans la partie 1a et d'autre part à limiter les zones de contact entre le conduit 2 et la partie 1a. En effet, une surface restreinte de contact correspond à réduction des échanges thermiques et à une amélioration des prestations thermiques.

Seule la partie creuse 1a reçoit un conduit de distribution d'air 2 de façon à répondre à la contrainte géométrique qui restreint l'espace de la planche de bord. Le fait de coupler les fonctions de résistance structurelle et de distribution d'air libère de l'espace qui reste disponible pour intégrer d'autres fonctions dans la planche de bord. La partie tubulaire 1b est de dimensions réduites par rapport à une traverse conventionnelle et son encombrement réduit permet de faire passer un conduit de distribution d'air distinct de la partie tubulaire 1b, pour alimenter en air la partie droite de l'habitacle du véhicule.

La pièce de raccordement 1c est de forme compatible avec les extrémités respectives des parties creuse 1a et tubulaire 1b. Elle est soudée sur chacune de ses extrémités pour assurer la rigidité de l'ensemble de la traverse 1.

Le fait d'avoir un conduit 2 extrudé en matière plastique de forme simple et de section constante le long d'une arrête longitudinale, permet de réduire le coût de réalisation d'une telle pièce et facilite le montage de l'ensemble de la traverse 1. En effet, le conduit 2 est inséré par la gauche de la partie creuse 1a (dans le sens de la flèche F de la figure 2) qui reçoit ensuite la pièce de raccordement 1c sur sa droite. Enfin, la partie tubulaire 1b est soudée sur cette pièce de raccordement 1c et l'ensemble de la traverse 1 ainsi monté est intégré dans la structure de caisse du véhicule.

Enfin, la forme issue d'extrusion du conduit 2 lui permet de garder une section constante du fait de sa rigidité propre ce qui d'une facilite la diffusion de l'air à travers le dispositif de distribution, et d'autre part améliore la qualité du montage du conduit dans le traverse 1.

## Revendications

1. Véhicule automobile comportant au moins une traverse (1) creuse rigide de renforcement de la structure du véhicule intégrant un conduit de distribution d'air dans l'habitacle
**caractérisé en ce que** la traverse (1) comporte une traverse rectiligne en caisson creux (1a) et une traverse tubulaire (1b) qui sont reliées par une pièce de raccordement (1c) s'adaptant aux formes des traverses (1a, 1b) et assurant la rigidité de l'ensemble,
**en ce que** le conduit (2) est issu d'extrusion, **en ce que** la section dudit conduit (2) est constante le long d'une arrête longitudinale, et est placé et maintenu dans la traverse en caisson creux (1a) à distance de la paroi interne de la traverse au moyen d'excroissances (3) issues de ladite traverse (1).

2. Véhicule selon la revendication 1, **caractérisé en ce que** le conduit extrudé (2) comporte aux moins deux ouvertures (4, 5) destinées à faire circuler l'air issu d'un bloc de climatisation (6) vers un habitacle de véhicule.

3. Véhicule selon l'une des revendications précédentes, **caractérisé en ce que** les excroissances (3) sont réparties régulièrement sur la périphérie et sur la longueur de la traverse (1).

4. Véhicule selon l'une des revendications précédentes, **caractérisé en ce que** le conduit extrudé (2) est en matériau recyclable, et de préférence en matière plastique.

5. Véhicule selon l'une des revendications précédentes, **caractérisé en ce que** la traverse (1) est destinée à être placée à l'intérieur du tableau de bord de véhicule automobile pour le renforcer.

6. Procédé de montage d'un conduit de distribution d'air dans l'habitacle d'un véhicule automobile selon l'une des revendications précédentes, **caractérisé en ce qu'**on assemble la traverse creuse (1a), la traverse tubulaire (1b) et la pièce de raccordement (1c) pour formez la traverse (1), on emboîte le conduit extrudé dans la traverse creuse (1a), et on monte l'ensemble ainsi assemblé dans le tableau de bord du véhicule.

## Claims

1. Motor vehicle comprising at least one rigid hollow crossmember (1) for reinforcing the structure of the vehicle a duct for distributing air into the cabin, incorporating
in that the duct (2) is obtained by extrusion **characterized in that** the crossmember (1) comprises a a hollow box-section rectilinear crossmember (1a) and a tubular crossmember (1b) which are joined together by a connecting piece (1c) which is tailored to the shapes of the crossmembers (1a, 1b) and ensures the rigidity of the assembly, **in that** the cross section of said duct (2) is constant along a longitudinal edge, and said duct is placed and maintained in the hollow box-section crossmember (1a) at a distance from the inner wall of the crossmember by means of protrusions (3) emanating from said crossmember (1).

2. Vehicle according to Claim 1, **characterized in that** the extruded duct (2) has at least two openings (4, 5) intended to circulate the air emanating from an air-conditioning unit (6) toward a vehicle cabin.

3. Vehicle according to either of the preceding claims, **characterized in that** the protrusions (3) are distributed uniformly around the periphery and over the length of the crossmember (1).

4. Vehicle according to one of the preceding claims, **characterized in that** the extruded duct (2) is made of recyclable material, preferably plastic.

5. Vehicle claimed in one of the preceding claims, **characterized in that** the crossmember (1) is intended to be placed inside the motor vehicle instrument panel so as to reinforce it.

6. Method of mounting an air distribution duct in the cabin of a motor vehicle according to one of the preceding claims, **characterized in that** the hollow crossmember (1a), the tubular crossmember (1b) and the connecting piece (1c) are assembled to form the crossmember (1), the extruded duct is fitted in the hollow crossmember (1a), and the assembly thus assembled is mounted in the instrument panel of the vehicle.

## Patentansprüche

1. Kraftfahrzeug, das mindestens einen steifen hohlen Querträger (1) zur Verstärkung der Struktur des Fahrzeugs aufweist, in den ein Kanal zur Luftverteilung im Fahrzeuginnenraum integriert ist,
**dadurch gekennzeichnet, dass** der Querträger (1) einen als Hohlkasten ausgebildeten, geradlinigen Querträger (1a) und einen rohrförmigen Querträger (1b) aufweist, die durch ein Anschlussbauteil (1c) miteinander verbunden sind, das sich an die Formen der Querträger (1a, 1b) anpasst und die Steifheit der Einheit gewährleistet,
dass der Kanal (2) durch Extrudieren hergestellt wird, dass der Querschnitt des Kanals (2) entlang einer Längskante konstant ist, und er in dem als Hohlkasten ausgebildeten Querträger (1a) in Abstand zur Innenwand des Querträgers mittels Ausstülpungen (3) angeordnet und gehalten wird, die aus dem Querträger (1) stammen.

2. Fahrzeug nach Anspruch 1, **dadurch gekennzeichnet, dass** der extrudierte Kanal (2) mindestens zwei Öffnungen (4, 5) aufweist, die dazu bestimmt sind, die von einem Klimatisierungsblock (6) stammende Luft zu einem Fahrzeuginnenraum strömen zu lassen.

3. Fahrzeug nach einem der vorhergehenden Ansprüche, **dadurch gekennzeichnet, dass** die Ausstülpungen (3) gleichmäßig über den Umfang und über die Länge des Querträgers (1) verteilt sind.

4. Fahrzeug nach einem der vorhergehenden Ansprüche, **dadurch gekennzeichnet, dass** der extrudierte Kanal (2) aus recyclierbarem Material ist, und vorzugsweise aus Kunststoff.

5. Fahrzeug nach einem der vorhergehenden Ansprüche, **dadurch gekennzeichnet, dass** der Querträger (1) dazu bestimmt ist, im Inneren des Armaturenbretts eines Kraftfahrzeugs angeordnet zu werden, um es zu verstärken.

6. Verfahren zum Einbau eines Kanals zur Luftverteilung im Innenraum eines Kraftfahrzeugs nach einem der vorhergehenden Ansprüche, **dadurch gekennzeichnet, dass** der hohle Querträger (1a), der rohrförmige Querträger (1b) und das Anschlussbauteil (1c) zusammengebaut werden, um den Querträger (1) zu formen, der extrudierte Kanal in den hohlen Querträger (1a) eingeschoben wird, und die so zusammengebaute Einheit in das Armaturenbrett des Fahrzeugs montiert wird.
